(19) Europäisches Patentamt
European Patent Office
Office européen des brevets

(11) Numéro de publication: 0 412 882 A1

(12) # DEMANDE DE BREVET EUROPEEN

(21) Numéro de dépôt: 90402222.5

(51) Int. Cl.5: B01D 71/64, C08G 73/10

(22) Date de dépôt: 02.08.90

(30) Priorité: 11.08.89 FR 8910900

(43) Date de publication de la demande: 13.02.91 Bulletin 91/07

(84) Etats contractants désignés: BE CH DE DK FR GB IT LI NL

(71) Demandeur: INSTITUT FRANCAIS DU PETROLE
4, Avenue de Bois-Préau
F-92502 Rueil-Malmaison(FR)

(72) Inventeur: Avrillon, René
5, rue Marie Champsmesle
F-78600 Maisons Laffite(FR)
Inventeur: Deschamps, André
3, Chemin des Princes
F-78590 Noisy le Roi(FR)
Inventeur: Driancourt, Alain
4, rue François Villon
F-92340 Bourg la Reine(FR)
Inventeur: Mileo, Jean-Claude
La Fontaine Amélie
F-38330 Saint Ismier(FR)
Inventeur: Robert, Eric
11, rue Fillette Nicolas Philibert
F-92500 Rueil Malmaison(FR)
Inventeur: Senneron, Michel
Résidence L'Emmendra, 23, avenue du Vercors
F-38240 Meylan(FR)

(54) **Membrane de séparation de gaz.**

(57) On décrit une membrane de séparation de gaz comprenant un film d'épaisseur comprise entre $0,05.10^{-6}$ et $20.10^{-6}$ m dont au moins 90% molaire sont constitués d'au moins un polyimide ou copolyimide aromatique dont l'unité récurrente correspond à la formule (I) suivante :

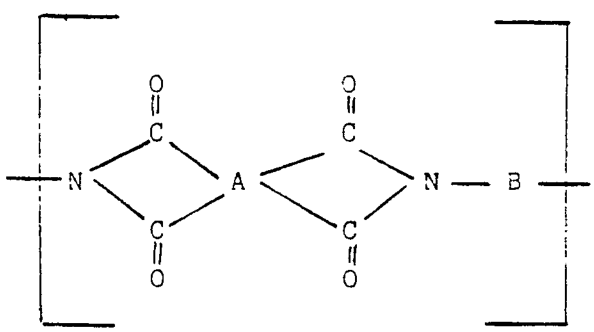

(I)

où A représente un radical aromatique tétravalent ou un mélange de radicaux aromatiques tétravalents,
et B représente un radical aromatique divalent dont au moins 50% molaire sont représentés par la formule (II) suivante :

EP 0 412 882 A1

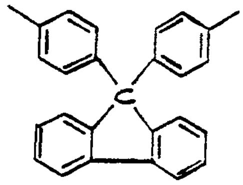

(II)

ladite formule (I) étant différente de la formule (III) suivante :

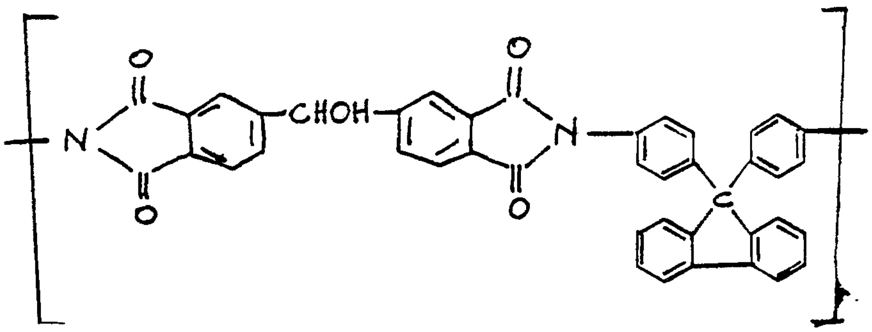

(III) .

La présente invention concerne une membrane de séparation de gaz comprenant au moins un film de faible épaisseur principalement constitué d'au moins un polyimide ou copolyimide aromatique particulier, de préférence préparé à partir de 9,9 bis (amino-4 phényl) fluorène.

L'utilisation de polyimides aromatiques dans les membranes de perméation gazeuse est notamment décrite dans les brevets USA- 4 378 324, 4 378 400, 4 512 893, 4 705 540, 4 717 393, 4 717 394 et 4 718 921.

Aucun de ces brevets ne mentionne l'emploi de 9,9 bis (amino-4phényl)fluorène pour la préparation de polyimides utilisables pour la séparation de gaz.

La membrane selon l'invention permet par apport aux membranes de l'art antérieur une séparation de gaz plus efficace. Le polyimide ou copolyimide contenu dans ladite membrane présente, d'une part, une excellente solubilité dans la plupart des solvants usuels utilisés pour la fabrication des membranes et, d'autre part, une perméabilité accrue aux gaz, tout en conservant une bonne sélectivité pour la séparation de gaz.

La membrane de séparation de gaz selon l'invention comprend au moins un film d'épaisseur avantageusement comprise entre $0{,}05.10^{-6}$ et $20.10^{-6}$ m, de préférence entre $0{,}1.10^{-6}$ et $15.10^{-6}$ m, dont au moins 90% molaire, de préférence au moins 95% molaire, sont constitués d'au moins un polyimide ou copolyimide aromatique dont l'unité récurrente correspond à la formule (1) suivante

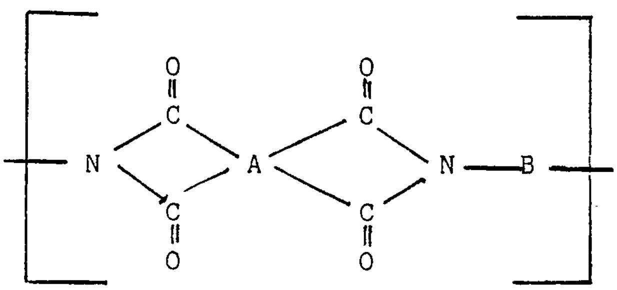

(I)

où A représente un radical aromatique tétravalent ou un mélange de radicaux aromatiques tétravalents, et B représente un radical aromatique divalent dont au moins 50% molaire sont représentés par la formule (II) suivante :

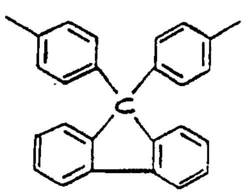

(II)

ladite formule (I) étant différente de la formule (III) suivante :

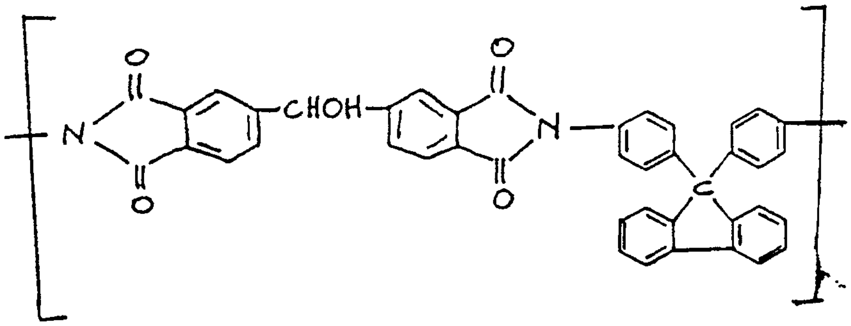

(III).

A peut notamment représenter au moins un radical substitué ou non. choisi parmi ceux représentés ci-après :

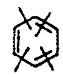 , 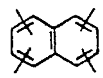 , 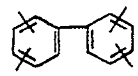 ,

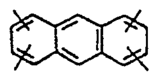 , 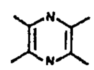 , 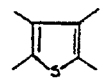 ,

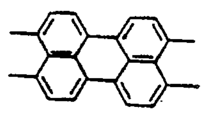 et 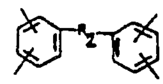

où $R_2$ represente un radical divalent choisi parmi les radicaux suivants : -O-, -S-, $-SO_2-$, -CO-, $-CH_2-$, $-C(CH_3)_2-$, -CHOH- (dans le cas où moins de 100% molaire de B sont représentés par ladite formule (II)) et $-C(CF_3)_2-$.

Ledit polyimide ou copolyimide aromatique que contient la membrane de séparation de gaz selon l'invention est avantageusement préparé par mise en réaction (réaction de polycondensation), dans un solvant approprié et généralement dans des conditions stoechiométriques ou proches de la stoechiométrie (écart en général inférieur à 30%, de préférence à 20%, en mole par rapport aux proportions stoechiométriques) :

- d'une part :

d'au moins un tétra-ester ou un diacide-diester dérivé d'au moins un acide aromatique tétracarboxylique et représenté par la formule (IV) suivante :

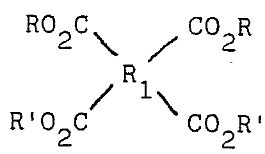

(IV)

ou d'au moins un dianhydride dérivé d'au moins un acide aromatique tétracarboxylique et représenté par la formule (Y) suivante :

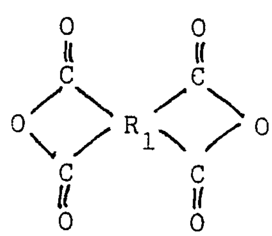

(V)

où, dans les formules (IV) et (V), R et R′, identiques ou différents, sont des radicaux monovalents d'hydrocarbures renfermant chacun 1 à 13 atomes de carbone, par exemple alcoyles inférieurs contenant 1 à 13 atomes de carbone, cycloalkoyles ou aryles renfermant 6 à 13 atomes de carbone, R pouvant également représenter un atome d'hydrogène (R′ étant alors défini comme ci-dessus); $R_1$ est un radical tétravalent substitué ou non, de préférence choisi parmi ceux représentés ci-après:

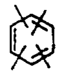 , 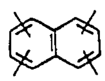 , 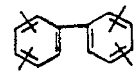 ,

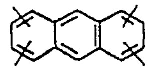 , 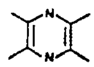 , 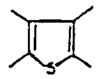 ,

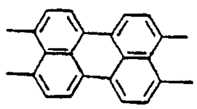 et 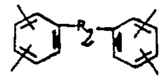

où $R_2$ représente un radical divalent choisi parmi les radicaux suivants : -O-, -S-, $SO_2$-, -CO-, $-CH_2-$, $-C(CH_3)_2-$, et $-C(CF_3)_2-$,

- avec, d'autre part :

. soit du 9,9 bis (amino-4 phényl) fluorène;

. soit un mélange contenant :

* 50 à 95% molaire de 9,9 bis (amino- 4 phényl) fluorène,

et

* 5 à 50% molaire d'au moins une diamine aromatique représentée par la formule (VI) suivante :

$H_2N - R_3 - NH_2$ (VI)

où $R_3$ est un radical divalent correpondant à l'une des formules (VII) à (XI) suivantes :

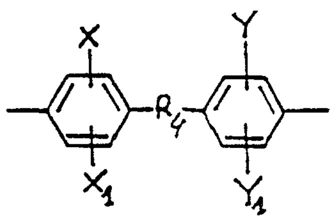 (VII) , 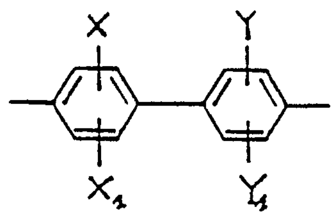 (VIII) ,

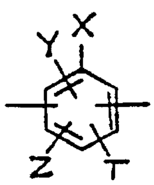 (IX), 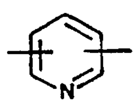 (X), 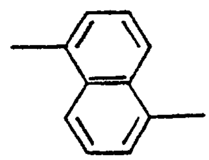 (XI)

X,Y,$X_1$,$Y_1$,Z,T, identiques ou différents, étant choisis parmi le groupe formé par l'atome d'hydrogène, le radical hydroxyle-OH, le radical carboxyle-COOH, les radicaux alkyles ou alkoxy ayant 1 à 3 atomes de carbone; $R_4$ étant un radical divalent choisi parmi le groupe formé par les radicaux suivants : -O-, -S-, $SO_2$-, -CO-, $-CH_2-$, $-C(CH_3)_2-$, $-C(CF_3)_2-$.

Dans le cas où la préparation s'effectue avec un mélange de 9,9 bis (amino-4 phényl) fluorène et d'au moins une diamine aromatique de formule (VI), $R_2$ peut également représenter le radical -CHOH-.

La réaction de polycondensation peut être effectuée selon tout procédé conventionnel, de préférence selon le procédé décrit dans le brevet US-A-4 736 015.

Parmi les tétra-esters ou diacide-diesters dérivés d'au moins un acide aromatique tétracarboxylique pouvant être employés dans la préparation des polyimides ou copolyimides considérés dans la présente invention, on peut citer : les tétra-esters symétriques, c'est-à-dire les composés de formule (IV) dans laquelle les radicaux R et R′ sont identiques, comme l'ester de tétraméthyle, l'ester de tétraéthyle, l'ester de tétrabutyle; les tétraesters dissymétriques représentés par la formule (IV) avec des radicaux R et R′, alkyle et/ou aryle, différents, comme l'ester de diméthyle diphényle, l'ester de diméthyle dibutyle, l'ester de diéthyle diphényle; les bis (ortho-acides-esters) appelés plus simplement diesters, c'est-à-dire les composés de formules (IV) dans laquelle R est un atome d'hydrogène et R′ un radical alkyle, comme par exemple le diester de méthyle, le diester d'éthyle, le diester de n-propyle, le diester d'isopropyle, le diester de n-butyle, le diester d'isobutyle, le diester d'amyle, le diester d'hexyle, le diester de 2-hydroxyéthyle.

Dans le cas le plus général, les tétraesters dissymétriques et les diesters ne sont pas des composés purs mais un mélange d'isomères; par exemple, le diester de méthyle peut être un mélange en proportions variables de dicarboxy-3,3′ diméthoxycarbonyl-4,4′, de dicarboxy-4,4′ diméthoxycarbonyl-3,3′ et de dicarboxy-3,4′ diméthoxycarbonyl-4,3′ des acides considérés.

Selon un mode de préparation préféré, on prépare au moins un polyimide ou copolyimide aromatique en dissolvant dans un solvant approprié du 9,9bis (amino-4phényl)fluorène, éventuellement au fins une diamine aromatique de formule (VI), et une quantité de préférence sensiblement équimoléculaire d'au moins un composé de formule (IV) ou (V). Le mélange réactionnel formé par le solvant et les réactifs est ensuite chauffé à une température avantageusement supérieure à 80 °C, généralement comprise entre 80 et 400 °C, de préférence entre 100 et 250 °C, jusqu 'à ce que la composition atteigne la viscosité désirée. La température est en général fixée à une valeur telle que la réaction des fonctions amines sur les dérivés d'acides(s) tétracarboxylique(s) s'effectue à une vitesse raisonnable.

Les solvants avec lesquels on prépare les polyimides ou copolyimides considérés dans l'invention sont habituellement des composés organiques polaires, c'est-à-dire renfermant un hétéroatome tel que O, N, S, P, inertes vis-à-vis des monomères et des polymères. Parmi ces solvants, on peut notamment citer les phénols, comme le phénol, les crésols, les xylénols, les chlorophénols, les mono et diethers de glycols, comme par exemple ceux de l'éthylèneglycol et du diéthylèneglycol, les amides, comme par exemple le méthylformamide, le diméthylformamide, l'hexaméthylphosphotriamide, le méthylacémide, le diméthylacétamide, les urées, comme par exemple la tétraméthylurée, les composés hétérocycliques, comme par exemple la pyridine, la quinoléine, le dioxanne, le tétrahydrofuranne, la N-méthylpyrrolidone, la N-acétylpyrrolidone, la tétraméthylènesulfone, les sulfones et sulfoxydes, comme par exemple la diméthylsulfone et le diméthylsulfoxyde.

Ces solvants peuvent être utilisés seuls ou mélangés entre eux, ou encore en mélange avec d'autres composés organiques liquides parmi lesquels on peut citer les alcools, tels que le méthanol, l'éthanol, le propanol, l'isopropanol, les butanols, l'alcool benzylique; les cétones, comme par exemple l'acétone, la butanone-2, la méthylisobutylcétone, la diisopropylcétone, la cyclohexanone, l'acétophénone; les hydrocarbures aromatiques, comme le benzène, le toluène, les xylènes, le solvant naphta; les hydrocarbures aromatiques halogénés, tels que le chlorobenzène, les dichlorobenzènes, les chlorotoluènes; les esters aliphatiques et aromatiques des acides carboxyliques aliphatiques et aromatiques, comme par exemple les acétates de méthyle, d'isopropyle, de butyle, de phényle, le benzoate de méthyle; des éthers, comme l'éther de dibutyle, l'éther de diphényle.

La concentration initiale des monomères dans le solvant de réaction n'est pas critique, mais elle est généralement comprise entre 10 et 80% en poids.

Les produits volatils (eau et/ou alcools) formés en cours de réaction peuvent être laissés dans le milieu, mais ils peuvent également être éliminés par distillation au fur et à mesure de leur formation, ce qui permet de contrôler l'avancement de la réaction.

Le film contenu dans les membranes de séparation de gaz selon l'invention est habituellement préparé par dissolution du (des) dit(s) polyimide(s) ou copolyimide(s), par exemple à une température comprise entre la température ambiante et 150 °C, à une concentration généralement comprise entre 3 et 35%, de préférence entre 5 et 25%, en poids dans au moins un solvant organique approprié.

Ledit solvant est par exemple choisi, en fonction de la solubilité du polyimide ou copolyimide, parmi le groupe formé par la N-méthylpyrrolidone, le diméthylformamide, le diméthylacétamide, le diméthylsulfoxyde, le o-, m- ou p-crésol, les dérivés phénoliques, les hydrocarbures halogénés, le dioxane et le tétrahydrofuranne.

La solution obtenue est généralement refroidie jusq'à la température ambiante (entre 15 et 25 °C) et de préférence filtrée et dégazée. La solution est alors étalée à l'aide d'un applicateur du commerce à couteau ou à barre sur une surface plane (support), telle qu'une plaque de verre, afin d'obtenir un film de ladite solution d'épaisseur comprise généralement entre 10 et $200.10^{-6}$ m, de préférence entre 30 et $150.10^{-6}$ m.

Puis, le solvant est évaporé, progressivement et par paliers, généralement sous vide ou sous courant de gaz inerte(s), par exemple à des températures comprises entre 80 et 220 °C pendant 6 à 22 heures. Le film de polyimide(s) ou copolyimide(s) ainsi obtenu est alors décollé du support, par exemple par immersion de l'ensemble constitué du film et du support dans un ou plusieurs bains d'eau successifs, à des températures en général différentes et comprises par exemple entre 10 et 80 °C. Le film est ensuite à nouveau séché sous vide ou sous courant de gaz inerte(s), de préférence par paliers, par exemple à des températures comprises entre 80 et 400 °C, de préférence entre 90 et 350 °C, pendant 6 à 22 heures. Ce traitement thermique final permet généralement d'améliorer les propriétés perméamétriques dudit film.

On obtient ainsi un film dense, dont l'épaisseur est comprise entre $0{,}05.10^{-6}$ et $20.10^{-6}$ m, de préférence entre $0{,}1.10^{-6}$m et $15.10^{-6}$ m. Un film trop épais aurait une perméabilité faible, un film trop

mince présenterait une sensibilité extrême au moindre défaut susceptible d'entraîner un passage non sélectif des gaz.

Les membranes de séparation selon l'invention comprennent généralement, outre ledit film dense, au moins une structure poreuse supportant ledit film; on parle alors de membranes de type asymétrique. Ces structures asymétriques peuvent être par exemple obtenues directement par les techniques conventionnelles d'inversion de phase ou bien encore par dépôt contrôlé d'un film dense sur une structure poreuse pré-existante; dans ce dernier cas, on parle de membranes composites. Ces membranes sont par exemple de forme plane ou filamentaire ou sous la forme de tubes ou fibres creux.

Les membranes de séparation selon l'invention sont notamment utilisables pour la déshydratation ou la désacidification d'un mélange d'hydrocarbures gazeux, pour la séparation de l'hydrogène d'un mélange d'hydrocarbures gazeux, pour la séparation entre de l'oxygène et de l'azote et, plus généralement, dans les procédés de séparation de gaz.

Les exemples suivants illustrent l'invention sans toutefois en limiter la portée.

Dans les exemples, la viscosité intrinsèque est déterminée à 30 °C dans la N-méthylpyrrolidone.

Les mesures de perméabilité à l'hydrogène, au monoxyde de carbone, au méthane, à l'oxygène et à l'azote sont effectuées sur les films denses de polyimide ou copolyimide à 20 °C, à une pression amont égale à 1 MPa et le vide en aval. Les mesures de perméabilité à l'eau sont effectuées à 50 °C avec de l'azote chargé en vapeur d'eau. La pression amont est égale à 1 MPa, la pression partielle d'eau est égale à 0,5 et le vide est appliqué en aval.

Les perméabilités aux différents gaz sont calculées à l'aide de la formule suivante :

$$P = \frac{V}{t.\Delta P} \cdot \frac{1}{A}$$

Elles sont exprimées en $cm^3/(cm^2.s.cm\ Hg)$.

V représente un volume de gaz (en $cm^3$, TPN) qui passe à travers le film dense, t représente la durée de perméation (en s), $\Delta P$ représente la différence de pression du gaz considéré entre les faces amont et aval du film et A représente la surface du film.

Les coefficients de perméabilités sont calculés à l'aide de la formule suivante :

$\rho = P \times e$

et sont exprimés en barrers (1 barrer = $10^{-10}$ $cm^3$. cm/ ($cm^2$ s. cm Hg)) où P représente la perméabilité mesurée et e l'épaisseur du film.

La sélectivité pour la séparation de deux gaz i et j est donnée par la formule suivante :

$\alpha\ i/j = \rho i/\rho j$

où $\rho i$ et $\rho j$ sont les coefficients de perméabilité respectivement des gaz i et j.

Exemple 1

Un mélange de 444 g de dianhydride de l'acide diphényl di(trifluorométhyl) méthane tétracarboxylique -3,3′,4,4′ et de 348 g de 9,9 bis (amino-4phényl)fluorène dans 792 g de N-méthylpyrrolidone est chauffé sous courant d'azote et sous agitation dans un bain d'huile qui permet de monter progressivement la température du mélange jusqu'à 190 °C. Les paliers de température sont 1 heure a 50 °C, 1 heure à 110 °C, 1 heure à 150 °C et 2 heures à 190 °C. En cours de réaction, on ajoute progressivement du m-crésol de manière à amener la concentration en produit sec à environ 30% en poids à la fin du cycle de température.

La solution obtenue est diluée pour obtenir une concentration comprise entre 15 et 20% en poids en produit sec, puis filtrée (à chaud) et précipitée avec une agitation vigoureuse dans un large excès de méthanol (de l'ordre de 10 volumes pour 1 volume de solution). Le mélange obtenu est filtré pour séparer les particules de polymère. Le polymère est à nouveau lavé plusieurs fois a l'eau puis séché à 90 °C dans une enceinte sous vide pendant 24 heures.

Le polyimide ainsi préparé a une viscosité intrinsèque égale à 0,51 dl/g.

Exemple 2

10g du polyimide préparé dans l'exemple 1 sont dissous sous agitation dans 90 g de N-méthylpyrrolidone à une température d'environ 100 ° C. La solution est refroidie jusqu'à la température ambiante, filtrée sur un filtre FLUOPORE 0,5 microns et dégazée.

Sous une hotte à flux luminaire classe 100, la solution est étalée à l'aide d'un applicateur à barre sur une plaque de verre pour obtenir un film de solution d'épaisseur égale à environ $100.10^{-6}$ m.

Le solvant est évaporé sous vide pendant 8 heures à 100 ° C et 4 heures à 180 ° C. Le film de polyimide est alors décollé du support en le plongeant alternativement dans de l'eau à 20 ° C et de l'eau à 60 ° C. Ce film est à nouveau séché sous vide pendant 8 heures à 100 ° C et 4 heures à 180 ° C.

On obtient ainsi un film dense d'épaisseur égale à $10.10^{-6}$ m.Ce film est soumis à un traitement thermique à 300 ° C pendant 4 heures sous courant d'azote.

Les résultats des tests de perméabilité sont donnés dans le tableau 1.

Exemple 3 (comparatif)

444 g de dianhydride de l'acide diphényl di(trifluorométhyl) méthane tétracarboxylique -3,3′,4,4′ sont mélangés à 198 g de (diamino-4,4′ diphényl) méthane selon le procédé de l'exemple 1. Le polyimide obtenu a une viscosité intrinsèque égale à 0,99 dl/g et est mis sous forme de film selon le procédé de l'exemple 2.

Les résultats des tests de perméabilité sont présentés dans le tableau 1.

Exemple 4 (comparatif)

444 g de dianhydride de l'acide diphényl di(triofluorométhyl) méthane tétracarboxylique -3,3′,4,4′ sont mélangés à 310 g de (tétraéthyl -3,3′,5,5′ diamino -4, 4′ diphényl) méthane selon le procédé de l'exemple 1. Le polyimide obtenu a une viscosité intrinsèque égale à 0,99 dl/g et est mis sous forme de film selon le procédé de l'exemple 2.

Les résultats des tests de perméabilité sont indiqués dans le tableau 1.

TABLEAU 1

| Exemple | ρ (barrer) | | | α | |
|---|---|---|---|---|---|
| | $H_2$ | $CO_2$ | $CH_4$ | $H_2/CH_4$ | $CO_2/CH_4$ |
| 2 | 112 | 64 | 1,75 | 64 | 36 |
| 3 | 41 | 16 | 0,37 | 111 | 43 |
| 4 | 112 | 95 | 6,5 | 17 | 14,6 |

Exemple 5

358 g de diester de méthyle de l'acide diphényltétracarboxylique -3,3′,4,4′ sont mélangés à 348 g de 9,9 bis (amino-4phényl)fluorène suivant le procédé de l'exemple 1. Le polyimide obtenu est mis sous forme de film dense selon le procédé de l'exemple 2.

Les résultats des tests de perméabilité sont présentés dans le tableau 2.

Exemple 6

386 g de diester de méthyle de l'acide benzhydrol tétracarboxylique -3,3′,4,4′ sont mélangés à 348 g de 9,9 bis (amino-4 phényl)fluorène selon le procédé de l'exemple 1. Le polyimide obtenu est mis sous

forme de film dense selon le procédé de l'exemple 2.

Les résultats de perméabilité sont donnés dans le tableau 2.

TABLEAU 2

| Exemple | ρ (barrer) | | | α | |
|---|---|---|---|---|---|
| | $H_2$ | $CO_2$ | $CH_4$ | $H_2/CH_4$ | $CO_2/CH_4$ |
| 2 | 112 | 64 | 1,75 | 64 | 36 |
| 5 | 25 | 8 | 0,22 | 110 | 35 |
| 6 | 24 | 8,5 | 2,22 | 109 | 38 |

## Revendications

1- Membrane de séparation de gaz caractérisée en ce qu'elle comprend au moins un film d'épaisseur comprise entre $0{,}05.10^{-6}$ et $20.10^{-6}$ m dont au moins 90% molaire sont constitués d'au moins un polyimide ou copolyimide aromatique dont l'unité récurrente correspond à la formule (I) suivante :

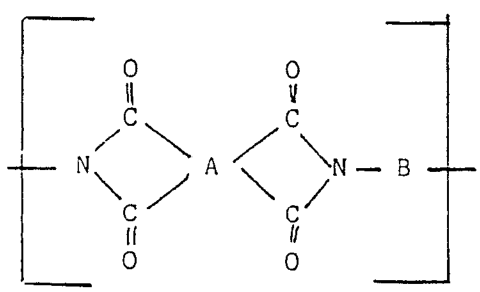

(I)

où A représente un radical aromatique tétravalent ou un mélange de radicaux aromatiques tétravalents, et B représente un radical aromatique divalent dont au moins 50% molaire sont représentés par la formule (II) suivante :

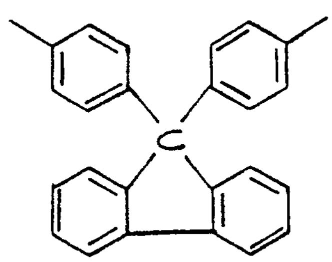

(II),

ladite formule (I) étant différente de la formule (III) suivante :

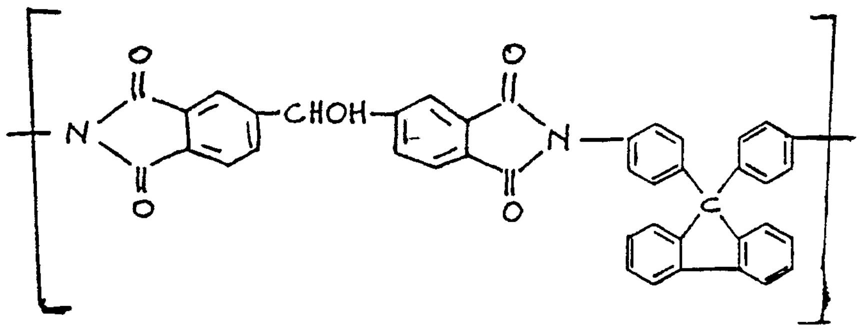

(III).

2- Membrane selon la revendication 1 caractérisée en ce qu'au moins 95% molaire dudit film sont constitués d'au moins un polyimide ou copolyimide aromatique dont l'unité récurrente correspond à ladite formule (I), ladite formule (I) étant différente ce ladite formule (III).

3- Membrane selon l'une des revendications 1 et 2 caractérisée en ce que ledit film a une épaisseur comprise entre $0,1.10^{-6}$ et $15.10^{-6}$ m.

4- Membrane selon l'une des revendications 1 à 3 caractérisée en ce que ledit polyimide ou copolyimide aromatique est préparé par mise en réaction d'au moins un tétra-ester ou un diacide-diester dérivé d'au moins un acide aromatique tétracarboxylique et représenté par la formule (IV) suivante:

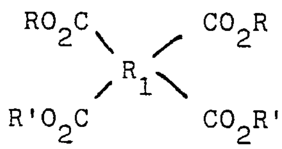

(IV)

ou d'au moins un dianhydride dérivé d'au moins un acide aromatique tétracarboxylique et représenté par la formule (V) suivante :

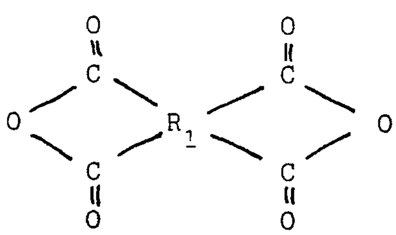

(V)

où, dans les formules (IV) et (V), R et R′, identiques ou différents, sont des radicaux monovalents d'hydrocarbures renfermant chacun 1 à 13 atomes de carbone, R pouvant également représenter un atome d'hydrogène; $R_1$ est un radical tétravalent substitué ou non choisi parmi ceux représentés ci-après :

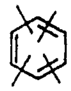 , 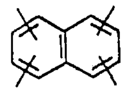 , 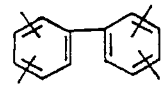 ,

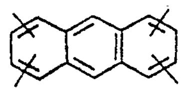 , 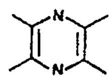 , 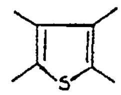 ,

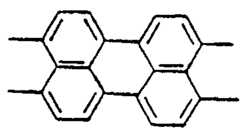 et 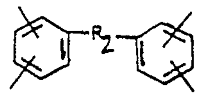

où $R_2$ repésente un radical divalent choisi parmi les radicaux suivants : -O-, -S-, $-SO_2-$, -CO-, $-CH_2-$, $-C(CH_3)_2-$et $-C(CF_3)_2-$, avec du 9,9 bis (amino-4phényl)fluorène.

5- Membrane selon l'une des revendications 1 à 3 caractérisée en ce que ledit polyimide ou copolyimide aromatique est préparé par mise en réaction d'au moins un tétra-ester ou un diacide-diester dérivé d'au moins un acide aromatique tétracarboxylique et représenté par la formule (IV) suivante :

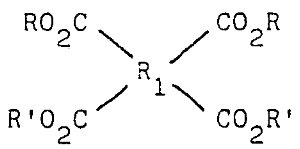 (IV)

ou d'au moins un dianhydride dérivé d'au moins un acide aromatique tétracarboxylique et représenté par la formule (V) suivante :

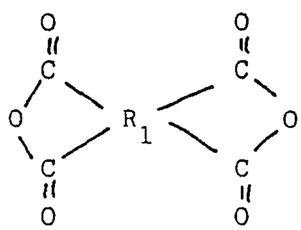 (V)

où, dans les formules (IV) et (V), R et R', identiques ou différents, sont des radicaux monovalents d'hydrocarbures renfermant chacun 1 à 13 atomes de carbone, R pouvant également représenter un atome d'hydrogène; $R_1$ est un radical tétravalent substitué ou non choisi parmi ceux représentés ci-après :

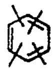 , 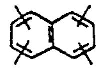 , 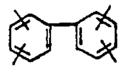 ,

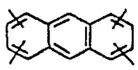 , 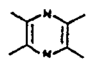 , 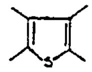 ,

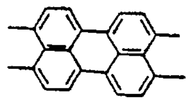 et 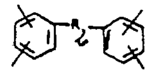

où $R_2$ représente un radical divalent choisi parmi les radicaux suivants : -O-, -S-, $-SO_2-$, -CO-, $-CH_2$ -, -C-$(CH_3)_2$-, -CHOH- et $-C(CF_3)_2-$,
avec un mélange contenant :
* 50 à 95% molaire de 9,9 bis (amino- 4 phényl) fluorène, et
* 5 à 50% molaire d'au moins une diamine aromatique représentée par la formule (VI) suivante :
$H_2N - R_3 - NH_2$ (VI)
où $R_3$ est un radical divalent correspondant à l'une des formules (VII) à (XI) suivantes :

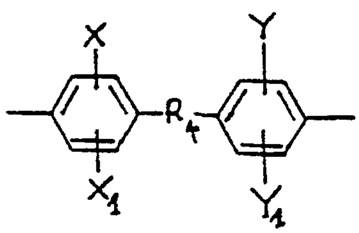 (VII) , 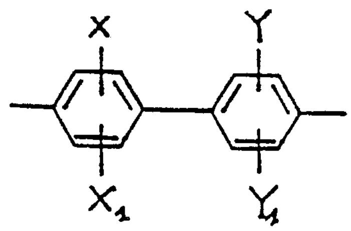 (VIII) ,

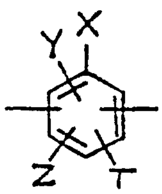 (IX) , 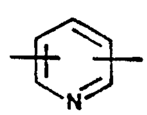 (X) , 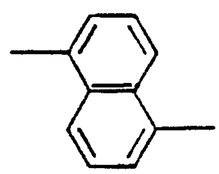 (XI)

X,Y,$X_1$,$Y_1$,Z,T, identiques ou différents, étant choisis parmi le groupe formé par l'atome d'hydrogène, le radical hydroxyle-OH, le radical carboxyle-COOH, les radicaux alkyles ou alkoxy ayant 1 à 3 atomes de carbone; $R_4$ étant un radical divalent choisi parmi le groupe formé par les radicaux suivants : -O-, -S-, $-SO_2-$ -CO-, $-CH_2-$, $-C(CH_3)_2-$, $-C(CF_3)_2-$.

6- Utilisation d'une membrane selon l'une des revendications 1 à 5 pour la déshydratation d'un mélange d'hydrocarbures gazeux.

7- Utilisation d'une membrane selon l'une des revendications 1 à 5 pour la désacidification d'un mélange d'hydrocarbures gazeux.

8- Utilisation d'une membrane selon l'une des revendications 1 à 5 pour la séparation de l'hydrogène d'un mélange d'hydrocarbures gazeux.

9- Utilisation d'une membrane selon l'une des revendications 1 à 5 pour la séparation entre de l'oxygène et de l'azote.

Office européen des brevets

# RAPPORT DE RECHERCHE EUROPEENNE

Numéro de la demande

**EP 90 40 2222**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 242 815 (NIPPON STEEL CORP.) * Page 3, lignes 1-5,28-55; page 4, lignes 18-21 * | 1,4,9 | B 01 D 71/64<br>C 08 G 73/10 |
| A | | 2,5 | |
| Y | EP-A-0 143 552 (NITTO ELECTRIC INDUSTRIAL CO.) * Page 4, ligne 18 - page 5, ligne 2; page 6, ligne 15 - page 7, ligne 1 * | 1,4,9 | |
| A | CHEMICAL ABSTRACTS, vol. 75, no. 8, 5 juillet 1971, page 5, résumé no. 49653c, Columbus, Ohio, US; V.V. KORSHAK et al.: "Formation of aromatic polyimides by high-temperature polycyclization in solution", & KINET. MECH. POLYREACTIONS, INT. SYMP. MACROMOL. CHEM., PREPR. 1969, 1, 53-7 | 1,4,5 | |
| A | CHEMICAL ABSTRACTS, vol. 111, no. 6, 3 juillet 1989, page 21, résumé no. 40157y, Columbus, Ohio, US; & JP-A-63 309 525 (NIPPON STEEL CORP.; NIPPON STEEL CHEMICAL CO., LTD) 16-12-1988 | 1,4,5 | |
| A | REVIEWS IN MACROMOLECULAR CHEMISTRY, vol. 12, no. 1, 1974, pages 45-129; V.V. KORSHAK: "Cardo polymers" | 4,5 | **DOMAINES TECHNIQUES RECHERCHES (Int. Cl.5)**<br>B 01 D<br>C 08 G |

Le présent rapport de recherche a été établi pour toutes les revendications

| Lieu de la recherche | Date d'achèvement de la recherche | Examinateur |
|---|---|---|
| La Haye | 20 novembre 90 | GONZALEZ ARIAS M.L. |

CATEGORIE DES DOCUMENTS CITES

- X : particulièrement pertinent à lui seul
- Y : particulièrement pertinent en combinaison avec un autre document de la même catégorie
- A : arrière-plan technologique
- O : divulgation non-écrite
- P : document intercalaire
- T : théorie ou principe à la base de l'invention
- E : document de brevet antérieur, mais publié à la date de dépôt ou après cette date
- D : cité dans la demande
- L : cité pour d'autres raisons
- & : membre de la même famille, document correspondant